# EUROPEAN PATENT SPECIFICATION

(11) **EP 3 173 862 B1**
(45) Date of publication and mention of the grant of the patent: **15.07.2020**
(21) Application number: 16201051.6
(22) Date of filing: 29.11.2016
(51) Int. Cl.: G02F 1/1343, G02F 1/1362, G02F 1/1334

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 30.11.2015 KR 20150169518
(43) Date of publication of application: 31.05.2017
(73) Proprietor: LG Display Co., Ltd., Seoul 07336 (KR)
(72) Inventor: LEE, Sang-Wook, 10852 Paju-si, Gyeonggi-do (KR)
(74) Representative: Viering, Jentschura & Partner mbB Patent- und Rechtsanwälte

(56) References cited:
- US-A1- 2010 296 015
- US-A1- 2014 184 984

## Description

The present application claims the priority benefit of Korean Patent Application No. 10-2015-0169518 filed in Republic of Korea on November 30, 2015.

### BACKGROUND OF THE INVENTION

### Field of the Invention

The present invention relates to a liquid crystal display device (LCD). In particular, the present invention relates to an LCD including a nano capsule liquid crystal layer.

### Discussion of the Related Art

With the advancement of information society, the display field of displaying electric information signals has been rapidly advanced. Accordingly, as flat display devices having advantages of thin profile, light weight and low power consumption, a liquid crystal display device (LCD), a plasma display panel device (PDP), an electroluminescent display device (ELD), a field emission display device (FED) and the like have been introduced and have rapidly replaced a conventional cathode ray tube (CRT).

Among the flat display devices, LCDs are most widely used in the fields of a laptop, monitor, television (TV) because they are excellent in displaying moving images and a high contrast ratio.

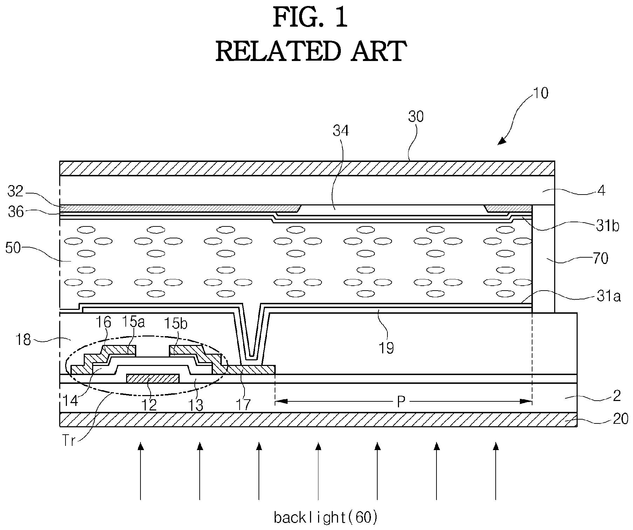

FIG. 1 is a cross-sectional view illustrating an LCD according to the related art.

Referring to FIG. 1, the related art LCD 10 includes a liquid crystal panel having a first substrate 2 and a second substrate 4 attached to each other with a liquid crystal layer 50 therebetween, and a backlight 60.

In detail, a thin film transistor Tr on the first substrate 2 includes a gate electrode 12, a gate insulating layer 13, an active layer 14, ohmic contact layers 15a and 15b, and source and drain electrodes 16 and 17, and is connected to a first electrode 19 in a pixel region P through a contact hole formed in an inter-layered insulating film 18.

Further, a black matrix 32 is below the second substrate 4, and has a lattice shape to surround the pixel region P such that the black matrix 32 shields a non-display element such as the thin film transistor Tr and exposes the first electrode 19.

Further, a color filter 34 is arranged in the lattice-shaped black matrix 32 corresponding to the pixel region P, and a second electrode is arranged to cover the black matrix 32 and the color filter 34.

Polarizing plates 20 and 30 each selectively transmitting a predetermined polarized light are attached below the first substrate 2 and on the second substrate 4, respectively.

Further, a first alignment layer 31a having a surface rubbed in a predetermined direction is between the liquid crystal layer 50 and the first electrode 19, and a second alignment layer 31b having a surface rubbed in a predetermined direction is between the liquid crystal layer 50 and the second electrode 36, and thus initial arrangement state and alignment direction of liquid crystal molecules are uniform.

Further, to prevent a leakage of the liquid crystal layer 50, a seal pattern 70 is arranged along edge portions of the first and second substrates 2 and 4.

Since the LCD 10 is not self-luminescent, the backlight 60 as a light source is arranged below the liquid crystal panel to supply light to the liquid crystal panel.

As the liquid crystal layer for the LCD 10, a nematic liquid crystal, a smetic liquid crystal, a cholesteric liquid crystal or the like is used, and the nematic liquid crystal is mostly used.

However, in the related art LCD 10, there is an disadvantage that an alignment process when attaching the two substrates 2 and 4 is additionally required after the substrates 2 and 4 are individually manufactured.

Further, processes of printing and rubbing the alignment layers 31a and 31b to align the liquid crystal are required, and due to this processes, production rate is reduced.

Further, a gap between the two substrates 2 and 4 needs to be maintained after attaching the substrates 2 and 4and injecting the liquid crystal between the substrates 2 and 4, and if a gap between the two substrates changes by an external pressure or impact, display quality may be degraded.

US 2010/296015 A1 discloses that a liquid crystal display includes: a first substrate and a second substrate disposed opposite the first substrate; a liquid crystal layer interposed between the first and second substrates and including liquid crystal molecules; a gate line which transmits a gate signal; first and second data lines which respectively transmit first and second data voltages, the first and second data voltages having opposite polarities; a first switching element connected to the gate line and the first data line; a second switching element connected to the gate line and the second data line; a first subpixel electrode connected to the first switching element; and a second subpixel electrode connected to the second switching element. The first and second subpixel electrodes overlap portions of the first and second data lines.; The first and second subpixel electrodes include first and second branches, respectively, which are alternately arranged between the first and second data lines.

US 2014/184984 A1 discloses a liquid crystal display (LCD) device and fabricating method thereof. The liquid crystal display device, including a liquid crystal panel, includes: a first substrate, including: a pixel electrode, and a common electrode separated from the pixel electrode, a ratio of a width of the pixel electrode to a distance between the pixel electrode and the common electrode being in a range of about 1:1 to 1:7, and a nanocapsule liquid crystal layer formed on the first substrate, the nanocapsule liquid crystal layer including: a buffer material, and nanocapsules, each filled with liquid crystal molecules.

### SUMMARY OF THE INVENTION

Accordingly, the present invention is directed to an LCD that substantially obviates one or more of the problems due to limitations and disadvantages of the related art.

An object of the present invention is to provide an LCD that can prevent a flicker phenomenon and a light leakage phenomenon.

Additional features and advantages of the disclosure will be set forth in the description which follows, and in part will be apparent from the description, or may be learned by practice of the disclosure. The advantages of the disclosure will be realized and attained by the structure particularly pointed out in the written description and claims as well as the appended drawings.

To achieve these and other advantages, and in accordance with the purpose of the present invention, as embodied and broadly described herein, a liquid crystal display device is in accordance with claim 1. Further embodiments are described in the dependent claims.

In one or more embodiments, the upper portion of the first outermost electrode has an area greater than that of the lower portion of the first outermost electrode, and the lower portion of the second outermost electrode has an area greater than that of the upper portion of the second outermost electrode.

In one or more embodiments, each of the first and second electrodes are bent symmetrically with respect to a center of the first and second pixel regions.

In one or more embodiments, the liquid crystal display device further comprises a common line at a separate region between the second outermost electrode of the first pixel region and the first outermost electrode of the second pixel region.

In one or more embodiments, the common line is a first common line, wherein the device further comprises a second common line, wherein the first and second common lines are spaced apart from both sides of the second data line, respectively, are parallel with the second data line, and are connected to each other between the upper portion of the first outermost electrode of the second pixel region and the lower portion of the second outermost electrode of the first pixel region.

In one or more embodiments, the display device further comprising: a first thin film transistor that is connected to the gate line and the first data line, and supplies a first data voltage to the first electrode of the first pixel region; and a second thin film transistor that is connected to the gate line and the second data line, and supplies a second data voltage, which has a level opposite to a level of the first data voltage, to the second electrode of the first pixel region.

In one or more embodiments, the liquid crystal display device further comprises a color filter on the first and second data lines, wherein the first and second electrodes is on the color filter

In one or more embodiments, the liquid crystal display device further comprises a nano capsule liquid crystal layer on the first and second electrodes.

In one or more embodiments, the nano capsule liquid crystal layer is configured in a film type.

In one or more embodiments, the liquid crystal display device further comprises a first polarizing plate below the substrate and having the first polarization axis, and a second polarizing plate on the nano capsule liquid crystal layer and having a second polarization axis perpendicular to the first polarization axis.

In one or more embodiments, an inter-layered insulating film is disposed on the second data line, and the color filter is disposed on the inter-layered insulating film.

In one or more embodiments, there is no black matrix between the inter-layered insulating film and the color filter.

In one or more embodiments, the upper portion and lower portion of the first outermost electrode and the upper portion and lower portion of the second outermost electrode are divided with respect to a center of the first and second pixel regions, respectively.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure. In the drawings:
FIG. 1 is a cross-sectional view illustrating an LCD according to the related art;
FIG. 2 is a cross-sectional view illustrating an LCD according to a comparative example;
FIG. 3 is a plan view illustrating an LCD according to the comparative example;
FIGs. 4A to 4C are cross-sectional views taken along a line IV-IV of FIG. 3;
FIG. 5 is a cross-sectional view illustrating an LCD according to an embodiment of the present invention;
FIG. 6 is a plan view illustrating an LCD according to the embodiment of the present invention;
FIGs. 7A to 7C are cross-sectional views taken along a line VII-VII of FIG. 6; and
FIGs. 8A to 8C are cross-sectional views taken along a line VIII-VIII of FIG. 6.

### DETAILED DESCRIPTION OF THE ILLUSTRATED EMBODIMENTS

Reference will now be made in detail to embodiments, examples of which are illustrated in the accompanying drawings. The same or like reference numbers may be used throughout the drawings to refer to the same or like parts.

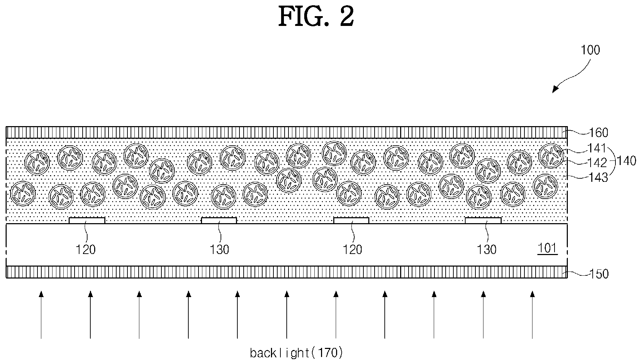

FIG. 2 is a cross-sectional view illustrating an LCD according to a comparative example.

Referring to FIG. 2, the LCD 100 includes a substrate 101, first and second electrodes 120 and 130 on the substrate 101, a nano capsule liquid crystal layer 140 on the first and second electrodes 120 and 130, and first and second polarizing plates 150 and 160 that are below the substrate 101 and on the nano capsule liquid crystal layer 140, respectively.

The nano capsule liquid crystal layer 140 is formed with nano capsules 142 that are dispersed in a buffer layer 143, and the nano capsule 142 has a size less than wavelengths of a visible light and is filled with liquid crystal molecules 141 randomly arranged.

The nano capsule liquid crystal layer 140 may be formed in a film type over the first and second electrodes 120 and 130.

Accordingly, unlike the related art LCD using two substrates, the LCD 100 can be manufactured with one substrate 101, and thus the LCD of light weight and thin profile can be achieved, and production cost can be reduced.

Further, the nano capsule liquid crystal layer 140 does not have the problem of the related art that the gap between the related art two substrates goes awry or changes by an external pressure or impact. Thus, when forming the substrate 101 using a flexible material such as a plastic, the nano capsule liquid crystal layer 140 can be effectively applied to a flexible LCD.

Further, the nano capsule liquid crystal layer 140 has an optical isotropy when an electric field is not applied. However, the nano capsule liquid crystal layer 140 has an optical property that when an electric field is applied, the liquid crystal molecules 141 in the nano capsule 142 are aligned in a direction of the electric field and birefringence of a light incident on the nano capsule liquid crystal layer 140 is produced.

Accordingly, the nano capsule liquid crystal layer 140 can form an optical axis according to an applied electric field, and by controlling an optical property using this, a light can be transmitted.

Further, the first polarizing plate 150 produces a polarization of a light to be incident on the nano capsule liquid crystal layer 140 from the backlight 170. The second polarizing plate 160 blocks a light that is incident on the nano capsule liquid crystal layer 140 and then passes through the nano capsule liquid crystal layer 140 without polarization by a birefringence effect of the nano capsule liquid crystal layer 140.

A polarization axis of the first polarizing plate 150 and a polarization axis of the second polarizing plate 160 are perpendicular to each other. For example, if the polarization axis of the first polarizing plate 150 has a 0 or 90 degrees angle, the polarization axis of the second polarization plate 160 has a 90 or 0 degrees angle.

A principle of operating the LCD 100 including the nano capsule liquid crystal layer 140 is explained below.

First, when an electric field is not induced between the first and second electrodes 120 and 130, the nano capsule liquid crystal layer 140 passes through a light entering it through the first polarizing plate 150, and thus the LCD 100 displays a black state.

In other words, in the off state with no electric field being applied, a light entering the first polarizing plate 150 from the backlight 170 is selectively transmitted at a specific angle while passing through the first polarization plate 150, then the light entering the nano capsule liquid crystal layer 140 is transmitted through the nano capsule liquid crystal layer 140 with a scattering phenomenon hardly happening and then reaches the second polarizing plate 160.

Finally, a light passing through the first polarization plate 150 having the polarization axis of, for example, 0 degrees angle enters the second polarization plate 160 having the polarization axis of, for example, 90 degrees angle, thus this light is blocked by the second polarizing plate 160 perpendicular in polarizing axis to the first polarizing plate 150, and thus the LCD 100 displays the black state.

As described above, unlike the related art LCD requiring that a pair of alignment layers are arranged on a pair of substrates opposing to each other, respectively, and a liquid crystal is injected between the substrates and is align to have predetermined pitch and direction, the LCD 100 can display the black state using the optical property of the nano capsule liquid crystal layer 140 and thus does not require an alignment of a liquid crystal additionally.

Accordingly, the LCD 100 can eliminate processes of printing and rubbing an alignment layer that the related art LCD necessarily requires.

When an electric field is induced between the first and second electrodes 120 and 130, the nano capsule liquid crystal layer 140 rotates a polarization axis of a light entering the nano capsule liquid crystal layer 140 through the first polarization plate 150 by 90 degrees angle, and thus the LCD 100 displays a white state.

In detail, in the on state with the electric field being induced, since the liquid crystal molecules 141 in the nano capsule 142 are arranged in parallel with a direction of the electric field, a birefringence effect by the alignment of the liquid crystal molecules 141 is produced.

In this case, a light entering the nano capsule liquid crystal layer 140 through the first polarizing plate 150 changes in polarization by the birefringence effect of the nano capsule liquid crystal layer 140. When a retardation, Δn^{∗}d, of the nano capsule liquid crystal layer 140 meets a λ/2 condition of a light incident thereon, a polarization axis of the incident light is rotated by 90 degrees angle, thus this light is not absorbed by the second polarizing plate 160 perpendicular in polarization axis to the first polarizing plate 150 and passes through the second polarizing plate 160, and thus the LCD 100 displays the white state.

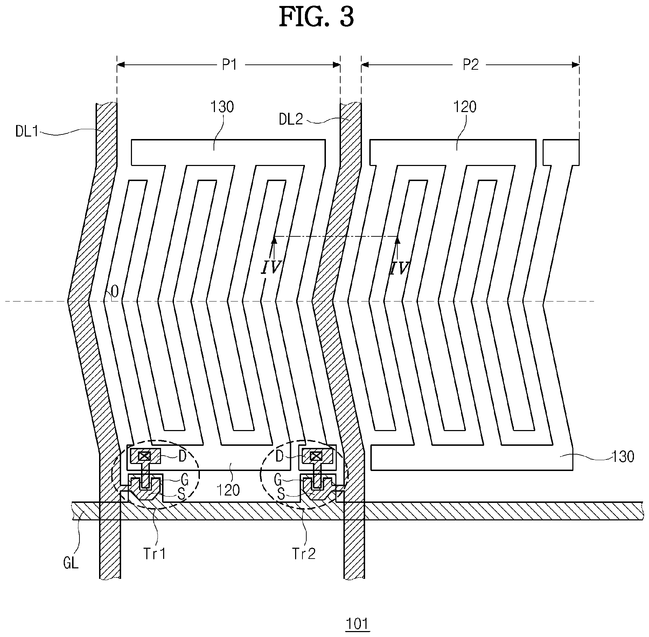

FIG. 3 is a plan view illustrating an LCD according to the comparative example.

Referring to FIG. 3, the LCD 100 includes a gate line GL on the substrate 101, first and second data lines DL1 and DL2 crossing the gate line GL to define first and second pixel regions P1 and P2, respectively, and first and second electrodes 120 and 130 in each of the first and second pixel regions P1 and P2, and first and second thin film transistors Tr1 and Tr2 in the first pixel region P1.

In detail, the first and second electrodes 120 and 130 each include a plurality of bars and are alternately arranged and spaced apart from each other. In a plane view, each of the first and second electrodes 120 and 130 has a symmetrically bent shape with respect to a center of the first and second pixel regions P1 and P2.

Accordingly, the first and second data lines DL1 and DL2 has a symmetrically bent shape with respect to the center of the first and second pixel regions P1 and P2.

In other words, the first and second electrodes 120 and 130, and the first and second data lines DL1 and DL2 are slanted at an angle θ with respect to a horizontal line extended along the center of the first and second pixel regions P1 and P2. For example, the angle θ may be 30 degrees to 90 degrees, and preferably 45 degrees.

Accordingly, occurrence of a color difference by change of a viewing angle can be prevented.

Further, the first thin film transistor Tr1 is connected to the gate line GL and the first data line DL1 and supplies a first data voltage to the first electrode 120 of the first pixel region P1. The second thin film transistor Tr2 is connected to the gate line GL and the second data line DL2 and supplies a second data voltage, which has a level opposite to a level of the first data voltage, to the second electrode 130 of the first pixel region P1.

The first thin film transistor Tr1 includes a gate electrode G connected to the gate line GL, a source electrode S connected to the first data line DL1, and a drain electrode D connected to the first electrode 120. The second thin film transistor Tr2 includes a gate electrode G connected to the gate line GL, a source electrode S connected to the second data line DL2, and a drain electrode D connected to the second electrode 130.

A method of driving the LCD 100 is explained with reference to FIG. 3.

First, in the related art LCD, only a data voltage supplied from a data line to a first electrode is swung.

In other words, with respect to a constant common voltage supplied from a common line, as a reference, a data voltage supplied from a data line to a first electrode alternates between positive and negative voltages.

However, in the LCD 100, both the first and second data voltages supplied from the first and second data lines DL1 and DL2 to the first and second electrodes 120 and 130, respectively, are swung.

In other words, the first data voltage is supplied from the first data line DL1 to the first electrode 120 alternating between positive and negative voltages with respect to a constant common voltage, and the second data voltage having a level opposite to the level of the first data voltage is supplied from the second data line DL2 to the second electrode 130.

Thus, since the LCD 100 applies two times the data voltage of the related art LCD to each of the first and second pixel regions P1 and P2, a light transmittance of the nano capsule liquid crystal layer (140 of FIG. 2) can be improved.

The first and second electrodes 120 and 130 may be formed at the same layer and of the same material, and when forming the first and second electrodes 120 and 130, a misalignment may be happened.

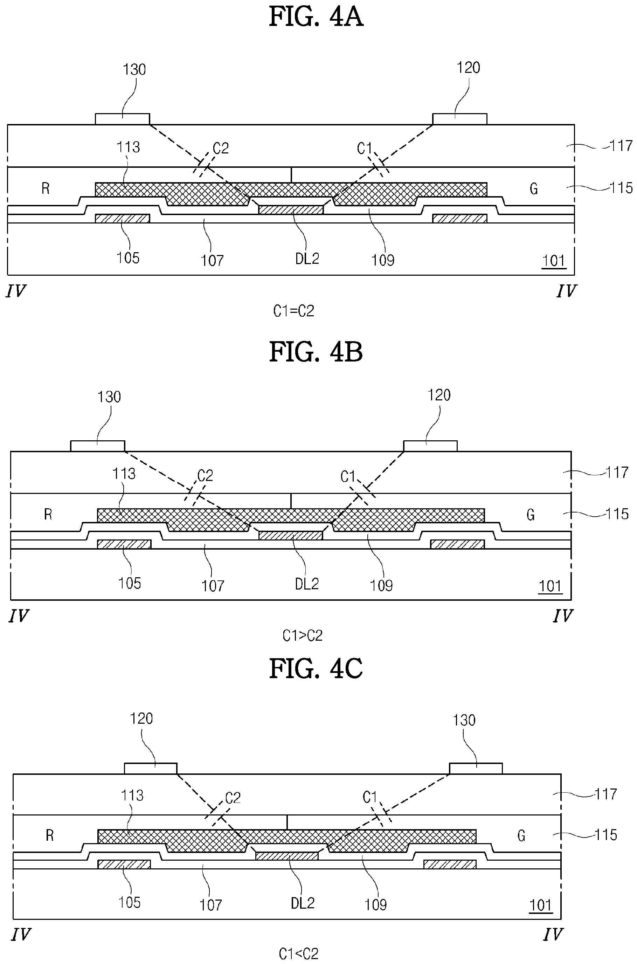

FIGs. 4A to 4C are cross-sectional views taken along a line IV-IV of FIG. 3. FIG. 4A shows a case that a misalignment is not happened and the first and second electrodes 120 and 130are formed at right positions, FIG. 4B shows a case that a misalignment is happened and the first and second electrodes 120 and 130 are shifted leftward, and FIG. 4C shows a case that a misalignment is happened and the first and second electrodes 120 and 130 are shifted rightward.

Referring to FIGs. 4A to 4C, the LCD 100 includes a gate insulating layer 107 on the substrate 101, the second data line DL2 on the gate insulating layer 107 between the first and second pixel regions P1 and P2, an inter-layered insulating film 109 on the second data line DL, a color filter 115 on the inter-layered insulating film 109, a passivation layer 117 on the color filter 115, and the first and second electrodes 120 and 130 on the passivation layer 117.

The LCD 100 further includes common lines 105 that are between the substrate 101 and the gate insulating layer 107, are spaced apart from both sides of the second data line DL2, respectively, and are parallel with the second data line DL2.

In detail, the color filters 115 may display red (R) and green (G) and blue in respective pixel regions, and as shown in the drawings, the color filters 115 of the first and second pixel regions P1 and P2 display red (R) and green (G), respectively.

Further, a black matrix 113 may be between the inter-layered insulating film 109 and the color filter 115. The black matrix 113 is located between neighboring pixel regions P1 and P2 to cover non-display elements between the pixel regions P1 and P2 and prevent light leakage between the common lines 105 and the second data line DL2.

Referring to FIG. 4A, in the case that the misalignment is not happened when forming the first and second electrodes 120 and 130 and the first and second electrodes 120 and 130 are located at right positions, a first capacitance C1 produced between the outermost first electrode 120 of the second pixel region P2 and the second data line DL2, and a second capacitance C2 produced between the outermost second electrode 130 of the first pixel region P1 and the second data line DL2 are equal to each other (i.e., C1 = C2).

In other words, a distance between the outermost first electrode 120 of the second pixel region P2 and the second data line DL2, and a distance between the outermost second electrode 130 of the first pixel region P1 and the second data line DL2 are equal to each other, and thus the first capacitance C1 and the second capacitance C2 are equal to each other.

However, referring to FIG. 4B, in the case that the misalignment is happened when forming the first and second electrodes 120 and 130 and the first and second electrodes 120 and 130 are shifter leftward, a first capacitance C1 produced between the outermost first electrode 120 of the second pixel region P2 and the second data line DL2 is greater than a second capacitance C2 produced between the outermost second electrode 130 of the first pixel region P1 and the second data line DL2 (i.e., C1 > C2).

In other words, a capacitance is in inverse proportion to a distance between electrodes, and since a distance between the outermost first electrode 120 of the second pixel region P2 and the second data line DL2 is less than a distance between the outermost second electrode 130 of the first pixel region P1 and the second data line DL2, the first capacitance C1 is greater than the second capacitance C2.

Further, referring to FIG. 4C, in the case that the misalignment is happened when forming the first and second electrodes 120 and 130 and the first and second electrodes 120 and 130 are shifter rightward, a first capacitance C1 produced between the outermost first electrode 120 of the second pixel region P2 and the second data line DL2 is less than a second capacitance C2 produced between the outermost second electrode 130 of the first pixel region P1 and the second data line DL2 (i.e., C1 < C2).

In other words, since a distance between the outermost first electrode 120 of the second pixel region P2 and the second data line DL2 is greater than a distance between the outermost second electrode 130 of the first pixel region P1 and the second data line DL2, the first capacitance C1 is less than the second capacitance C2.

The capacitances between the outermost first and second electrodes 120 and 130 of the first and second pixel regions P1 and P2 and the corresponding data line influences the data voltages supplied to the first electrode 120 and the second electrode 130. Accordingly, due to the difference of the capacitances, the data voltage applied between the first and second electrodes 120 and 130 in a frame inversion driving is changed per frame, and thus a flicker phenomenon is happened.

To prevent the flicker phenomenon, the outermost first electrode 120 of the second pixel region P2 and the outermost second electrode 130 of the first pixel region P1 may be formed at a distance such that the capacitances are not produced. However, this case causes reduction of aperture ratio.

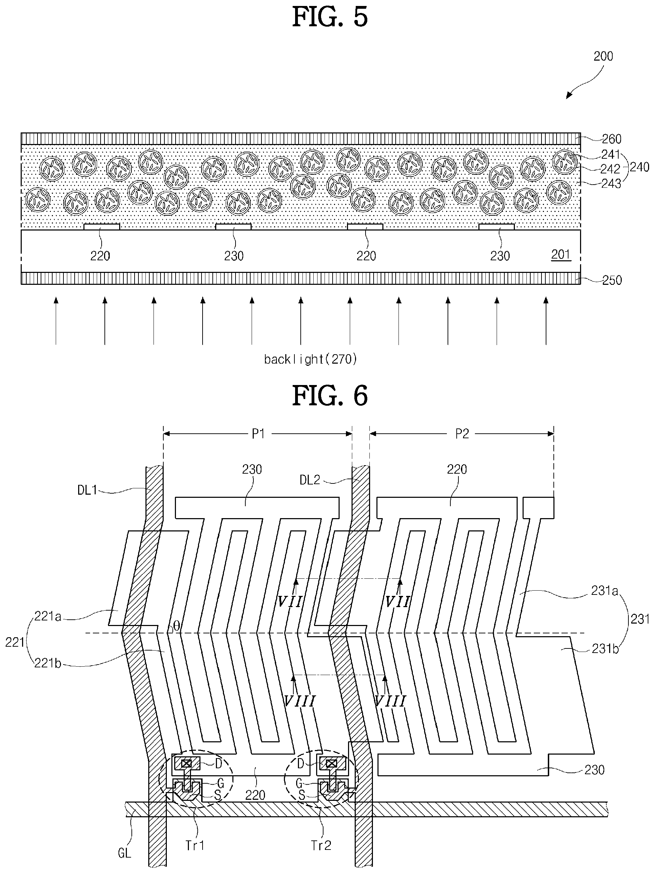

FIG. 5 is a cross-sectional view illustrating an LCD according to an embodiment of the present invention.

Referring to FIG. 5, the LCD 200 of the embodiment includes a substrate 201, first and second electrodes 220 and 230 on the substrate 201, a nano capsule liquid crystal layer 240 on the first and second electrodes 220 and 230, and first and second polarizing plates 250 and 260 that are below the substrate 201 and on the nano capsule liquid crystal layer 240, respectively.

The nano capsule liquid crystal layer 240 is formed with nano capsules 242 that are dispersed in a buffer layer 243, and the nano capsule 242 has a size less than wavelengths of a visible light and is filled with liquid crystal molecules 241 randomly arranged.

The nano capsule liquid crystal layer 240 may be formed in a film type over the first and second electrodes 220 and 230.

Accordingly, unlike the related art LCD using two substrates, the LCD 200 of this embodiment can be manufactured with one substrate 201, and thus the LCD of light weight and thin profile can be achieved, and production cost can be reduced.

Further, the nano capsule liquid crystal layer 240 does not have the problem of the related art that the gap between the related art two substrates goes awry or changes by an external pressure or impact. Thus, when forming the substrate 201 using a flexible material such as a plastic, the nano capsule liquid crystal layer 240 can be effectively applied to a flexible LCD.

Further, the nano capsule liquid crystal layer 240 has an optical isotropy when an electric filed is not applied. However, the nano capsule liquid crystal layer 240 has an optical property that when an electric field is applied, the liquid crystal molecules 241 in the nano capsule 242 are aligned in a direction of the electric field and birefringence of a light incident on the nano capsule liquid crystal layer 240 is produced.

Accordingly, the nano capsule liquid crystal layer 240 can form an optical axis according to an applied electric field, and by controlling an optical property using this, a light can be transmitted.

Further, the first polarizing plate 250 produces a polarization of a light to be incident on the nano capsule liquid crystal layer 240 from the backlight 270. The second polarizing plate 260 blocks a light that is incident on the nano capsule liquid crystal layer 240 and then passes through the nano capsule liquid crystal layer 240 without polarization by a birefringence effect of the nano capsule liquid crystal layer 240.

A polarization axis of the first polarizing plate 250 and a polarization axis of the second polarizing plate 260 are perpendicular to each other. For example, if the polarization axis of the first polarizing plate 250 has a 0 or 90 degrees angle, the polarization axis of the second polarization plate 260 has a 90 or 0 degrees angle.

A principle of operating the LCD 200 including the nano capsule liquid crystal layer 240 is explained below.

First, when an electric field is not induced between the first and second electrodes 220 and 230, the nano capsule liquid crystal layer 240 passes through a light entering it through the first polarizing plate 250, and thus the LCD 200 displays a black state.

In other words, in the off state with no electric field being applied, a light entering the first polarizing plate 250 from the backlight 270 is selectively transmitted at a specific angle while passing through the first polarization plate 250, then the light entering the nano capsule liquid crystal layer 240 is transmitted through the nano capsule liquid crystal layer 240 with a scattering phenomenon hardly happening and then reaches the second polarizing plate 260.

Finally, a light passing through the first polarization plate 250 having the polarization axis of, for example, 0 degrees angle enters the second polarization plate 260 having the polarization axis of, for example, 90 degrees angle, thus this light is blocked by the second polarizing plate 260 perpendicular in polarizing axis to the first polarizing plate 250, and thus the LCD 200 displays the black state.

As described above, unlike the related art LCD requiring that a pair of alignment layers are arranged on a pair of substrates opposing to each other, respectively, and a liquid crystal is injected between the substrates and is align to have predetermined pitch and direction, the LCD 200 of this embodiment can display the black state using the optical property of the nano capsule liquid crystal layer 240 and thus does not require an alignment of a liquid crystal additionally.

Accordingly, the LCD 200 of this embodiment can eliminate processes of printing and rubbing an alignment layer that the related art LCD necessarily requires.

When an electric field is induced between the first and second electrodes 220 and 230, the nano capsule liquid crystal layer 240 rotates a polarization axis of a light entering the nano capsule liquid crystal layer 240 through the first polarization plate 250 by 90 degrees angle, and thus the LCD 200 displays a white state.

In detail, in the on state with the electric field being induced, since the liquid crystal molecules 241 in the nano capsule 242 are arranged in parallel with a direction of the electric field, a birefringence effect by the alignment of the liquid crystal molecules 241 is produced.

In this case, a light entering the nano capsule liquid crystal layer 240 through the first polarizing plate 250 changes in polarization by the birefringence effect of the nano capsule liquid crystal layer 240. When a retardation, Δn^{∗}d, of the nano capsule liquid crystal layer 240 meets a λ/2 condition of a light incident thereon, a polarization axis of the incident light is rotated by 90 degrees angle, thus this light is not absorbed by the second polarizing plate 260 perpendicular in polarization axis to the first polarizing plate 250 and passes through the second polarizing plate 260, and thus the LCD 200 displays the white state.

FIG. 6 is a plan view illustrating an LCD according to the embodiment of the present invention.

Referring to FIG. 6, the LCD 200 includes a gate line GL on the substrate 201, first and second data lines DL1 and DL2 crossing the gate line GL to define first and second pixel regions P1 and P2, respectively, and first and second electrodes 220 and 230 in each of the first and second pixels P1 and P2, and first and second thin film transistors Tr1 and Tr2 in the first pixel region P1.

In detail, the first and second electrodes 220 and 230 each include a plurality of bars and are alternately arranged and spaced apart from each other. In a plane view, each of the first and second electrodes 220 and 230 has a symmetrically bent shape with respect to a center of the first and second pixel regions P1 and P2.

Accordingly, the first and second data lines DL1 and DL2 has a symmetrically bent shape with respect to the center of the first and second pixel regions P1 and P2.

In other words, the first and second electrodes 220 and 230, and the first and second data lines DL1 and DL2 are slanted at an angle θ with respect to a horizontal line extended along the center of the first and second pixel regions P1 and P2. For example, the angle θ may be 30 degrees to 90 degrees, and preferably 45 degrees.

Accordingly, occurrence of a color difference by change of a viewing angle can be prevented.

Further, a first outermost electrode 221, which is an outermost electrode of each pixel region, of the first electrode 220 may be divided into an upper portion 221a and a lower portion 221b located at an upper side and a lower side with respect to the center of the first and second pixel regions P1 and P2. A second outermost electrode 231, which is an outermost electrode of each pixel region, of the second electrode 230 may be divided into an upper portion 231a and a lower portion 231b located at an upper side and a lower side with respect to the center of the first and second pixel regions P1 and P2.

The upper portion 221a of the first outermost electrode 221 of each of the first and second pixel regions P1 and P2 may overlap each of the first and second data lines DL1 and DL2, and the lower portion 221b of the first outermost electrode 221 of each of the first and second pixel regions P1 and P2 may be spaced apart from each of the first and second data lines DL1 and DL2. The upper portion 231a of the second outermost electrode 231 of the first pixel region P1 may be spaced apart from the second data line DL2, and the lower portion 231b of the second outermost electrode 231 of the first pixel region P1 may overlap the second data line DL2.

The upper portion 221a and the lower portion 221b of the first outermost electrode 221 may change positions, and the upper portion 231a and the lower portion 231b of the second outermost electrode 231 may change positions.

The lower portion 231b of the second outermost electrode 231 of the first pixel region P1 may extend into the second pixel region P2, and the upper portion 221a of the first outermost electrode 221 of the second pixel region P2 may extend into the first pixel region P1.

The upper portion 221a of the first outermost electrode 221 of each of the first and second pixel regions P1 and P2 may have an area greater than that of the lower portion 221b of the first outermost electrode 221 of each of the first and second pixel regions P1 and P2. The lower portion 231b of the second outermost electrode 231 of each of the first and second pixel regions P1 and P2 may have an area greater than that of the upper portion 231a of the second outermost electrode 231 of each of the first and second pixel regions P1 and P2.

Further, the first thin film transistor Tr1 is connected to the gate line GL and the first data line DL1 and supplies a first data voltage to the first electrode 220 of the first pixel region P1. The second thin film transistor Tr2 is connected to the gate line GL and the second data line DL2 and supplies a second data voltage, which has a level opposite to a level of the first data voltage, to the second electrode 230 of the first pixel region P1.

The first thin film transistor Tr1 includes a gate electrode G connected to the gate line GL, a source electrode S connected to the first data line DL1, and a drain electrode D connected to the first electrode 220. The second thin film transistor Tr2 includes a gate electrode G connected to the gate line GL, a source electrode S connected to the second data line DL2, and a drain electrode D connected to the second electrode 230.

A method of driving the LCD 200 is explained with reference to FIG. 6.

First, in the related art LCD, only a data voltage supplied from a data line to a first electrode is swung.

In other words, with respect to a constant common voltage supplied from a common line, as a reference, a data voltage supplied from a data line to a first electrode alternates between positive and negative voltages.

However, in the LCD 200 of this embodiment, both the first and second data voltages supplied from the first and second data lines DL1 and DL2 to the first and second electrodes 220 and 230, respectively, are swung.

In other words, the first data voltage is supplied from the first data line DL1 to the first electrode 220 alternating between positive and negative voltages with respect to a constant common voltage, and the second data voltage having a level opposite to the level of the first data voltage is supplied from the second data line DL2 to the second electrode 230.

Thus, since the LCD 200 of this embodiment applies two times the data voltage of the related art LCD to each of the first and second pixel regions P1 and P2, a light transmittance of the nano capsule liquid crystal layer (240 of FIG. 5) can be improved.

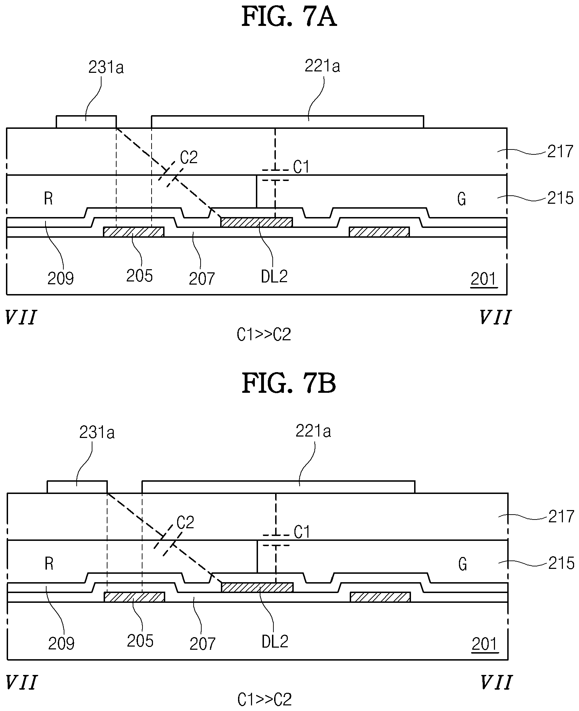

Even though not shown in FIG. 6, a common line (205 of FIG. 7A) is arranged at a separate region between the second outermost electrode 231 of the first pixel region P1 and the first outermost electrode 221 of the second pixel region P1.

In detail, the common lines (205 of FIG. 7A) are spaced apart from both sides of the second data line DL2, respectively, are parallel with the second data line DL2, and are connected to each other between the upper portion 221a of the first outermost electrode 221 of the second pixel region P2 and the lower portion 231b of the second outermost electrode 231 of the first pixel region P1.

Because of this configuration of the common lines (205 of FIG. 7A), even though a black matrix (113 of FIG. 4A) is not formed between the first and second pixel regions P1 and P2, light leakage at the separate region between the second outermost electrode 231 of the first pixel region P1 and the first outermost electrode 221 of the second pixel region P2 can be prevented by the common lines (205 of FIG. 7A).

The common line (205 of FIG. 7A) may be formed at the same layer and of the same material as the gate line GL.

Accordingly, the black matrix can be eliminated, and production processes can be simplified and production costs can be reduced.

The first and second electrodes 220 and 230 may be formed at the same layer and of the same material, and when forming the first and second electrodes 220 and 230, a misalignment may be happened.

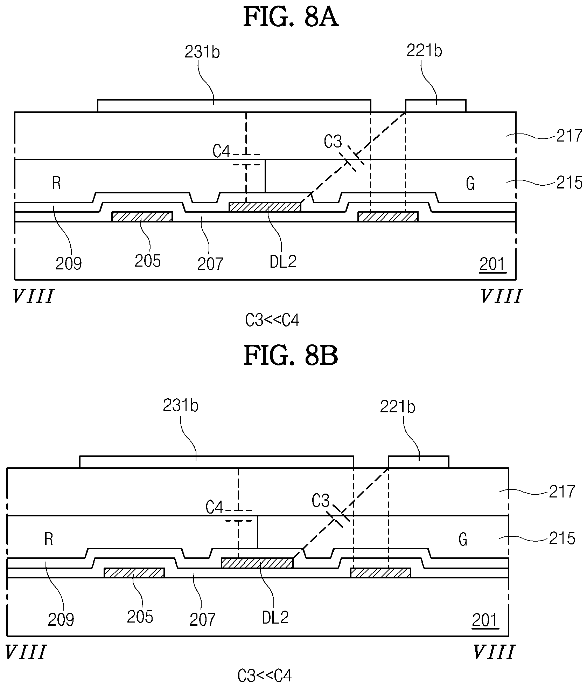

FIGs. 7A to 7C are cross-sectional views taken along a line VII-VII of FIG. 6, and FIGs. 8A to 8C are cross-sectional views taken along a line VIII-VIII of FIG. 6.

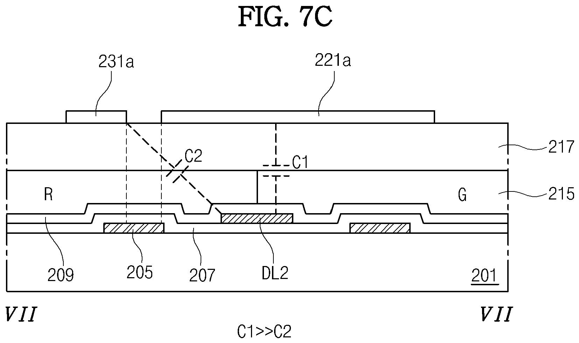

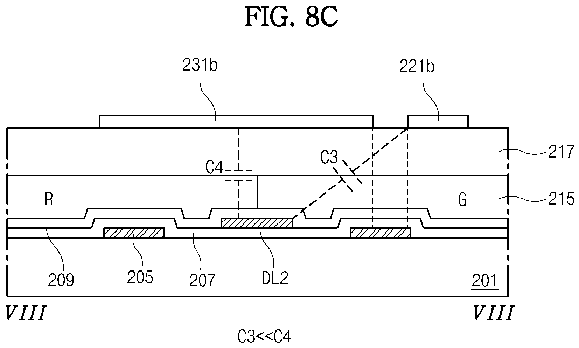

In detail, FIGs. 7A and 8A show a case that a misalignment is not happened and the first and second electrodes 220 and 230 are formed at right positions, FIGs. 7B and 8B show a case that a misalignment is happened and the first and second electrodes 220 and 230 are shifted leftward, and FIGs. 7C and 8C show a case that a misalignment is happened and the first and second electrodes 220 and 230 are shifted rightward.

Referring to FIGs. 7A to 8C, the LCD 200 includes a gate insulating layer 207 on the substrate 201, the second data line DL2 on the gate insulating layer 207 between the first and second pixel regions P1 and P2, an inter-layered insulating film 209 on the second data line DL, a color filter 215 on the inter-layered insulating film 209, a passivation layer 217 on the color filter 215, and the first and second electrodes 220 and 230 on the passivation layer 217. The first electrode 220 includes a first outermost electrode 221(221a and 221b) as an outermost electrode part at each of the first and second pixel regions P1 and P2, and the second electrode 230 includes a second outermost electrode 231(231a and 231b) as an outermost electrode part at each of the first and second pixel regions P1 and P2.

The LCD 200 further includes the common lines 205 that are between the substrate 201 and the gate insulating layer 207, are spaced apart from both sides of the second data line DL2, respectively, and are parallel with the second data line DL2.

In detail, the color filters 215 may display red (R) and green (G) and blue in respective pixel regions, and as shown in the drawings, the color filters 215 of the first and second pixel regions P1 and P2 display red (R) and green (G), respectively.

Referring to FIGs. 7A and 8A, in the case that the misalignment is not happened when forming the first and second electrodes 220 and 230 and the first and second electrodes 220 and 230 are located at right positions, a sum of a first capacitance C1 produced between the upper portion 221a of the first outermost electrode 221 of the second pixel region P2 and the second data line DL2, and a third capacitance C3 produced between the lower portion 221b of the first outermost electrode 221 of the second pixel region P2 and the second data line DL2 is equal to a sum of a second capacitance C2 produced between the upper portion 231a of the second outermost electrode 231 of the first pixel region P1 and the second data line DL2, and a fourth capacitance C4 produced between the lower portion 231b of the second outermost electrode 231 of the first pixel region P1 and the second data line DL2 (i.e., C1+C3 = C2+C4).

In other words, since a distance and an overlap area between the upper portion 221a of the first outermost electrode 221 and the second data line DL2 is equal to a distance and an overlap area between the lower portion 231b of the second outermost electrode 231 and the second data line DL2, the first capacitance C1 is equal to the fourth capacitance C4. Since a distance between the upper portion 231a of the second outermost electrode 231 and the second data line DL2 is equal to a distance between the lower portion 221b of the first outermost electrode 221 and the second data line DL2, the second capacitance C2 is equal to the third capacitance C3.

Since a capacitance is in inverse proportion to a distance between electrodes and is in proportion to an overlap area between electrodes, the first capacitance C1 is much greater than the second capacitance C2 (i.e., C1 >> C2), and the fourth capacitance C4 is much greater than the third capacitance C3 (i.e., C4 >> C3).

Further, referring to FIGs. 7B and 8B, in the case that the misalignment has happened when forming the first and second electrodes 220 and 230 and the first and second electrodes 220 and 230 are shifted leftward, a sum of a first capacitance C1 produced between the upper portion 221a of the first outermost electrode 221 of the second pixel region P2 and the second data line DL2, and a third capacitance C3 produced between the lower portion 221b of the first outermost electrode 221 of the second pixel region P2 and the second data line DL2 is very close to a sum of a second capacitance C2 produced between the upper portion 231a of the second outermost electrode 231 of the first pixel region P1 and the second data line DL2, and a fourth capacitance C4 produced between the lower portion 231b of the second outermost electrode 231 of the first pixel region P1 and the second data line DL2 (i.e., C1+C3 ≈ C2+C4).

In other words, since a distance and an overlap area between the upper portion 221a of the first outermost electrode 221 and the second data line DL2 are equal to a distance and an overlap area between the lower portion 231b of the second outermost electrode 231 and the second data line DL2, the first capacitance C1 is equal to the fourth capacitance C4. Since a distance between the upper portion 231a of the second outermost electrode 231 and the second data line DL2 is greater than a distance between the lower portion 221b of the first outermost electrode 221 and the second data line DL2, the second capacitance C2 is less than the third capacitance C3.

Since a capacitance is in inverse proportion to a distance between electrodes and is in proportion to an overlap area between electrodes, the first capacitance C1 is much greater than the second capacitance C2 (i.e., C1 >> C2), and the fourth capacitance C4 is much greater than the third capacitance C3 (i.e., C4 >> C3).

Accordingly, since the second and third capacitances C2 and C3 much less than the first and fourth capacitances C1 and C4 are negligible, the sum of the first and third capacitances C1 and C3 is almost equal to the sum of the second and fourth capacitances C2 and C4 (i.e., C1+C3 ≈ C2+C4).

In other words, even though the second and third capacitances C2 and C3 are changed by the misalignment, due to the first and fourth capacitances C1 and C4 much greater than the second and third capacitances C2 and C3, the changed second and third capacitances C2 and C3 do not influence the corresponding capacitance sums.

Further, referring to FIGs. 7C and 8C, in the case that the misalignment has happened when forming the first and second electrodes 220 and 230 and the first and second electrodes 220 and 230 are shifted rightward, a sum of a first capacitance C1 produced between the upper portion 221a of the first outermost electrode 221 of the second pixel region P2 and the second data line DL2, and a third capacitance C3 produced between the lower portion 221b of the first outermost electrode 221 of the second pixel region P2 and the second data line DL2 is very close to a sum of a second capacitance C2 produced between the upper portion 231a of the second outermost electrode 231 of the first pixel region P1 and the second data line DL2, and a fourth capacitance C4 produced between the lower portion 231b of the second outermost electrode 231 of the first pixel region P1 and the second data line DL2 (i.e., C1+C3 ≈ C2+C4).

In other words, since a distance and an overlap area between the upper portion 221a of the first outermost electrode 221 and the second data line DL2 are equal to a distance and an overlap area between the lower portion 231b of the second outermost electrode 231 and the second data line DL2, the first capacitance C1 is equal to the fourth capacitance C4. Since a distance between the upper portion 231a of the second outermost electrode 231 and the second data line DL2 is less than a distance between the lower portion 221b of the first outermost electrode 221 and the second data line DL2, the second capacitance C2 is greater than the third capacitance C3.

Since a capacitance is in inverse proportion to a distance between electrodes and is in proportion to an overlap area between electrodes, the first capacitance C1 is much greater than the second capacitance C2 (i.e., C1 >> C2), and the fourth capacitance C4 is much greater than the third capacitance C3 (i.e., C4 >> C3).

Accordingly, since the second and third capacitances C2 and C3 much less than the first and fourth capacitances C1 and C4 are negligible, the sum of the first and third capacitances C1 and C3 is almost equal to the sum of the second and fourth capacitances C2 and C4 (i.e., C1+C3 ≈ C2+C4).

In other words, even though the second and third capacitances C2 and C3 are changed by the misalignment, due to the first and fourth capacitances C1 and C4 much greater than the second and third capacitances C2 and C3, the changed second and third capacitances C2 and C3 do not influence the corresponding capacitance sums.

As described above, even though the misalignment is happened when forming the first and second electrodes 220 and 230, the capacitance between the first outermost electrode 221(221a and 221b) and the data line and the capacitance between the second outermost electrode 231(231a and 231b) and the data line are substantially equal to each other in each pixel region. Accordingly, a flicker phenomenon, which is caused by the data voltage applied between the first and second electrodes 220 and 230 in a frame inversion driving being changed per frame due to the difference capacitances, can be prevented.

Further, in preventing the flicker phenomenon, the second outermost electrode 231 of the first pixel region P1 and the first outermost electrode 221 of the second pixel region P2 are not required to be formed at a distance such that the capacitances are not produced. Accordingly, aperture ratio can be improved.

The common line 205 is arranged at a separate region between the second outermost electrode 231 of the first pixel region P1 and the first outermost electrode 221 of the second pixel region P2.

In detail, the common lines 205 are spaced apart from both sides of the second data line DL2, respectively, are parallel with the second data line DL2, and are connected to each other between the upper portion 221a of the first outermost electrode 221 of the second pixel region P2 and the lower portion 231b of the second outermost electrode 231 of the first pixel region P1.

Because of this configuration of the common lines 205, even though a black matrix (113 of FIG. 4A) is not formed between the first and second pixel regions P1 and P2, light leakage at the separate region between the second outermost electrode 231 of the first pixel region P1 and the first outermost electrode 221 of the second pixel region P2 can be prevented by the common lines 205.

The common line 205 may be formed at the same layer and of the same material as the gate line GL.

Accordingly, the black matrix can be eliminated, and production processes can be simplified and production costs can be reduced.

## Claims

1. A liquid crystal display device, comprising:
a gate line (GL) on a substrate (201);
first and second data lines (DL1, DL2) crossing the gate line (GL) to define first and second pixel regions (P1, P2), respectively, wherein the pixel regions (P1, P2) do not include the area which is covered by the data lines (DL1, DL2) in plan view; and
first and second electrodes (220, 230) arranged at each of the first and second pixel regions (P1, P2), each electrode having a plurality of bars, and including first and second outermost sub-electrodes (221, 231) which are outermost with respect to the respective pixel region (P1, P2), respectively, the bars of the first electrode (220) being alternately arranged with the bars of the second electrode (230), wherein the first outermost sub-electrode (221) of the first electrode (220) and the second outermost sub-electrode (231) of the second electrode (230) are in each case divided into an upper portion (221a, 231a) and a lower portion (221b, 231b) with respect to a center line of the first and second pixel regions (P1, P2),
wherein the lower portions (221b, 231b) of the first and second outermost sub-electrodes (221, 231) are closer to the gate line (GL) and the upper portions (221a, 231a) of the first and second outermost sub-electrodes (221, 231) are farther from the gate line (GL),
wherein the first outermost sub-electrode (221) of the first electrode (220) in the first pixel region (P1) includes a bar that is arranged closest to the first data line (DL1) in plan view,
wherein the second outermost sub-electrode (231) of the second electrode (230) in the first pixel region (P1) includes a bar that is arranged closest to the second data line (DL2) in plan view,
wherein the first outermost sub-electrode (221) of the first electrode (220) in the second pixel region (P2) includes a bar that is arranged closest to the second data line (DL2) in plan view,
wherein the first data line (DL1) overlaps the upper portion (221a) of the first outermost sub-electrode (221) of the first electrode (220) in the first pixel region (P1), and is spaced apart from the lower portion (221b) of the first outermost sub-electrode (221) of the first electrode (220) in the first pixel region (P1) in plan view,
wherein the second data line (DL2) is spaced apart from the upper portion (231a) of the second outermost sub-electrode (231) of the second electrode (230) in the first pixel region (P1) in plan view, and overlaps the lower portion (231b) of the second outermost sub-electrode (231) of the second electrode (230) in the first pixel region (P1), and
wherein the second data line (DL2) is spaced apart from the lower portion (221b) of the first outermost sub-electrode (221) of the first electrode (220) in the second pixel region (P2) in plan view,
**characterised in that**
the second data line (DL2) overlaps the upper portion (221a) of the first outermost sub-electrode (221) of the first electrode (220) in the second pixel region (P2), and
**in that** the lower portion (231b) of the second outermost sub-electrode (231) of the second electrode (230) in the first pixel region (P1) extends into the second pixel region (P2), and the upper portion (221a) of the first outermost sub-electrode (221) of the first electrode (220) in the second pixel region (P2) extends into the first pixel region (P1).

2. The device of claim 1, wherein the upper portion (221a) of the first outermost sub-electrode (221) has an area greater than that of the lower portion (221b) of the first outermost sub-electrode (221), and the lower portion (231b) of the second outermost sub-electrode (231) has an area greater than that of the upper portion (231a) of the second outermost sub-electrode (231).

3. The device of any one of claims 1 to 2, wherein each of the first and second electrodes (220, 230) are bent symmetrically with respect to a center line of the first and second pixel regions (P1, P2).

4. The device of any one of claims 1 to 3, further comprising a common line (205) at a separate region between the second outermost sub-electrode (231) of the second electrode (230) in the first pixel region (P1) and the first outermost sub-electrode (221) of the first electrode (220) in the second pixel region (P2).

5. The device of claim 4, wherein the common line (205) is a first common line, wherein the device further comprises a second common line (205), wherein the first and second common lines (205) are spaced apart from both sides of the second data line (DL2), respectively, are parallel with the second data line (DL2), and are connected to each other between the upper portion (221a) of the first outermost sub-electrode (221) of the first electrode (220) in the second pixel region (P2) and the lower portion (231b) of the second outermost sub-electrode (231) of the second electrode (230) in the first pixel region (P1).

6. The device of any one of claims 1 to 5, further comprising:
a first thin film transistor (Tr1) that is connected to the gate line (GL) and the first data line (DL1), and is configured to supply a first data voltage to the first electrode (220) of the first pixel region (P1); and
a second thin film transistor (Tr2) that is connected to the gate line (GL) and the second data line (DL2), and is configured to supply a second data voltage, which has a level opposite to a level of the first data voltage, to the second electrode (230) of the first pixel region (P1).

7. The device of claim 6, further comprising a color filter (215) on the first and second data lines (DL1, DL2), wherein the first and second electrodes (220, 230) are on the color filter (215).

8. The device of claim 6 or 7, further comprising a nano capsule liquid crystal layer (240) on the first and second electrodes (220, 230).

9. The device of claim 8, wherein the nano capsule liquid crystal layer (240) is configured in a film type.

10. The device of claim 8 or 9, further comprising a first polarizing plate (250) below the substrate (201) and having a first polarization axis, and a second polarizing plate (260) on the nano capsule liquid crystal layer (240) and having a second polarization axis perpendicular to the first polarization axis.

11. The device of any one of claim 7 to 10, wherein an inter-layered insulating film (209) is disposed on the second data line DL2, and the color filter (215) is disposed on the inter-layered insulating film (209).

12. The device of claim 11, wherein there is no black matrix between the inter-layered insulating film (209) and the color filter (215).

## Patentansprüche

1. Eine Flüssigkristall-Anzeigevorrichtung, aufweisend:
eine Gate-Leitung (GL) auf einem Substrat (201);
eine erste Datenleitung (DL1) und eine zweite Datenleitung (DL2), die die Gate-Leitung (GL) zum Definieren eines ersten Pixelbereichs (P1) bzw. eines zweiten Pixelbereichs (P2) überkreuzen, wobei die Pixelbereiche (P1, P2) in einer Draufsicht den Bereich, der von den Datenleitungen (DL1, DL2) überdeckt ist, nicht umfassen; und
eine erste Elektrode (220) und eine zweite Elektrode (230), die jeweils in dem ersten Pixelbereich (P1) und zweiten Pixelbereich (P2) angeordnet sind, wobei jede Elektrode eine Mehrzahl von Stegen aufweist und eine erste äußerste Sub-Elektrode (221) bzw. zweite äußerste Sub-Elektrode (231), die in Bezug auf den jeweiligen Pixelbereich (P1, P2) die äußersten sind, aufweist, wobei die Stege der ersten Elektrode (220) mit den Stegen der zweiten Elektrode (230) abwechselnd angeordnet sind, wobei die erste äußerste Sub-Elektrode (221) der ersten Elektrode (220) und die zweite äußerste Sub-Elektrode (231) der zweiten Elektrode (230) jeweils in Bezug auf eine Mittellinie des ersten Pixelbereichs (P1) und des zweiten Pixelbereichs (P2) in einen oberen Abschnitt (221a, 231a) und einen unteren Abschnitt (221b, 231b) unterteilt sind,
wobei die unteren Abschnitte (221b, 231b) der ersten äußersten Sub-Elektrode (221) und der zweiten äußersten Sub-Elektrode (231) dichter an der Gate-Leitung (GL) sind und die oberen Abschnitte (221a, 231a) der ersten äußersten Sub-Elektrode (221) und der zweiten äußersten Sub-Elektrode (231) weiter entfernt von der Gate-Leitung (GL) sind,
wobei die erste äußerste Sub-Elektrode (221) der ersten Elektrode (220) in dem ersten Pixelbereich (P1) einen Steg aufweist, der in Draufsicht am dichtesten zu der ersten Datenleitung (DL1) angeordnet ist,
wobei die zweite äußerste Sub-Elektrode (231) der zweiten Elektrode (230) in dem ersten Pixelbereich (P1) einen Steg aufweist, der in Draufsicht am dichtesten zu der zweiten Datenleitung (DL2) angeordnet ist,
wobei die erste äußerste Sub-Elektrode (221) der ersten Elektrode (220) in dem zweiten Pixelbereich (P2) einen Steg aufweist, der in Draufsicht am dichtesten zu der zweiten Datenleitung (DL2) angeordnet ist,
wobei die erste Datenleitung (DL1) den oberen Abschnitt (221a) der ersten äußersten Sub-Elektrode (221) der ersten Elektrode (220) in dem ersten Pixelbereich (P1) überlappt und in Draufsicht in einem Abstand von dem unteren Abschnitt (221b) der ersten äußersten Sub-Elektrode (221) der ersten Elektrode (220) in dem ersten Pixelbereich (P1) angeordnet ist,
wobei die zweite Datenleitung (DL2) in Draufsicht in einem Abstand von dem oberen Abschnitt (231a) der zweiten äußersten Sub-Elektrode (231) der zweiten Elektrode (230) in dem ersten Pixelbereich (P1) angeordnet ist und den unteren Abschnitt (231b) der zweiten äußersten Sub-Elektrode (231) der zweiten Elektrode (230) in dem ersten Pixelbereich (P1) überlappt, und
wobei die zweite Datenleitung (DL2) in Draufsicht in einem Abstand von dem unteren Abschnitt (221b) der ersten äußersten Sub-Elektrode (221) der ersten Elektrode (220) in dem zweiten Pixelbereich (P2) angeordnet ist,
**dadurch gekennzeichnet, dass**
die zweite Datenleitung (DL2) den oberen Abschnitt (221a) der ersten äußersten Sub-Elektrode (221) der ersten Elektrode (220) in dem zweiten Pixelbereich (P2) überlappt, und
dadurch, dass
der untere Abschnitt (231b) der zweiten äußersten Sub-Elektrode (231) der zweiten Elektrode (230) in dem ersten Pixelbereich (P1) sich in den zweiten Pixelbereich (P2) erstreckt und der obere Abschnitt (221a) der ersten äußersten Sub-Elektrode (221) der ersten Elektrode (220) in dem zweiten Pixelbereich (P2) sich in den ersten Pixelbereich (P1) erstreckt.

2. Die Vorrichtung gemäß Anspruch 1,
wobei der obere Abschnitt (221a) der ersten äußersten Sub-Elektrode (221) eine Fläche aufweist, die größer ist als die des unteren Abschnitts (221b) der ersten äußersten Sub-Elektrode (221), und der untere Abschnitt (231b) der zweiten äußersten Sub-Elektrode (231) eine Fläche aufweist, die größer ist als die des oberen Abschnitts (231a) der zweiten äußersten Sub-Elektrode (231) .

3. Die Vorrichtung gemäß einem der Ansprüche 1 bis 2,
wobei jede der ersten Elektrode (220) und zweiten Elektrode (230) in Bezug auf eine Mittellinie des ersten Pixelbereichs (P1) und zweiten Pixelbereichs (P2) symmetrisch gebogen ist.

4. Die Vorrichtung gemäß einem der Ansprüche 1 bis 3,
ferner aufweisend eine gemeinsame Leitung (205) in einem separaten Bereich zwischen der zweiten äußersten Sub-Elektrode (231) der zweiten Elektrode (230) in dem ersten Pixelbereich (P1) und der ersten äußersten Sub-Elektrode (221) der ersten Elektrode (220) in dem zweiten Pixelbereich (P2).

5. Die Vorrichtung gemäß Anspruch 4,
wobei die gemeinsame Leitung (205) eine erste gemeinsame Leitung ist,
wobei die Vorrichtung ferner eine zweite gemeinsame Leitung (205) aufweist, wobei die erste gemeinsame Leitung (205) und die zweite gemeinsame Leitung (205) jeweils in einem Abstand von beiden Seiten der zweiten Datenleitung (DL2) angeordnet sind, parallel zu der zweiten Datenleitung (DL2) sind und zwischen dem oberen Abschnitt (221a) der ersten äußersten Sub-Elektrode (221) der ersten Elektrode (220) in dem zweiten Pixelbereich (P2) und dem unteren Abschnitt (231b) der zweiten äußersten Sub-Elektrode (231) der zweiten Elektrode (230) in dem ersten Pixelbereich (P1) miteinander verbunden sind.

6. Die Vorrichtung gemäß einem der Ansprüche 1 bis 5,
ferner aufweisend:
einen ersten Dünnschichttransistor (Tr1), der mit der Gate-Leitung (GL) und der ersten Datenleitung (DL1) verbunden ist und dazu eingerichtet ist, der ersten Elektrode (220) des ersten Pixelbereichs (P1) eine erste Datenspannung zuzuführen; und
einen zweiten Dünnschichttransistor (Tr2), der mit der Gate-Leitung (GL) und der zweiten Datenleitung (DL2) verbunden ist und dazu eingerichtet ist, der zweiten Elektrode (230) des ersten Pixelbereichs (P1) eine zweite Datenspannung, die einen Pegel aufweist, der entgegengesetzt zu einem Pegel der ersten Datenspannung ist, zuzuführen.

7. Die Vorrichtung gemäß Anspruch 6,
ferner aufweisend ein Farbfilter (215) auf der ersten Datenleitung (DL1) und der zweiten Datenleitung (DL2),
wobei die erste Elektrode (220) und die zweite Elektrode (230) auf dem Farbfilter (215) sind.

8. Die Vorrichtung gemäß Anspruch 6 oder 7,
ferner aufweisend eine Nanokapsel-Flüssigkristallschicht (240) auf der ersten Elektrode (220) und zweiten Elektrode (230) .

9. Die Vorrichtung gemäß Anspruch 8,
wobei die Nanokapsel-Flüssigkristallschicht (240) als ein Film-Typ eingerichtet ist.

10. Die Vorrichtung gemäß Anspruch 8 oder 9,
ferner aufweisend eine erste Polarisationsplatte (250) unter dem Substrat (201), und die eine erste Polarisationsachse aufweist, und eine zweite Polarisationsplatte (260) auf der Nanokapsel-Flüssigkristallschicht (240), und die eine zweite Polarisationsachse, die senkrecht zu der ersten Polarisationsachse ist, aufweist.

11. Die Vorrichtung gemäß einem der Ansprüche 7 bis 10,
wobei eine Zwischenisolationsschicht (209) auf der zweiten Datenleitung (DL2) angeordnet ist und das Farbfilter (215) auf der Zwischenisolationsschicht (209) angeordnet ist.

12. Die Vorrichtung gemäß Anspruch 11,
wobei keine Schwarzmatrix zwischen der Zwischenisolationsschicht (209) und dem Farbfilter (215) ist.

## Revendications

1. Dispositif d'affichage à cristaux liquides, comprenant :
une ligne de grille (GL) sur un substrat (201),
des première et deuxième lignes de données (DL1, Dl2) croisant la ligne de grille (GL) pour définir des première et deuxième zones de pixels (P1, P2), respectivement, dans lequel les zones de pixels (P1, P2) n'incluent pas la zone couverte par les lignes de données (DL1, DL2) dans une vue en plan, et
des première et deuxième électrodes (220, 230) disposées dans chacune des première et deuxième zones de pixels (P1, P2), chaque électrode présentant une pluralité de barres et comprenant des première et deuxième sous-électrodes les plus extérieures (221, 231) qui sont les plus extérieures par rapport à la région de pixels respective (P1, P2), les barres de la première électrode (220) étant disposées en alternance avec les barres de la deuxième électrode (230), la première sous-électrode la plus extérieure (221) de la première électrode (220) et la deuxième sous-électrode la plus extérieure (231) de la deuxième électrode (230) étant divisées en une partie supérieure (221a, 231a) et une partie inférieure (221b, 231b) par rapport à une ligne centrale des première et deuxième zones de pixels (P1, P2), respectivement,
dans lequel les parties inférieures (221b, 231b) des première et deuxième sous-électrodes les plus extérieures (221, 231) sont plus proches de la ligne de grille (GL) et les parties supérieures (221a, 231a) des première et deuxième sous-électrodes les plus extérieures (221, 231) sont plus éloignées de la ligne de grille (GL),
dans lequel la première sous-électrode la plus extérieure (221) de la première électrode (220) dans la première zone de pixels (P1) présente une barre qui, selon une vue en plan, est disposée le plus près de la première ligne de données (DL1),
dans lequel la deuxième sous-électrode la plus extérieure (231) de la deuxième électrode (230) dans la première zone de pixels (P1) présente une barre qui, selon une vue en plan, est disposée le plus près de la deuxième ligne de données (DL2),
dans lequel la première sous-électrode la plus extérieure (221) de la première électrode (220) dans la deuxième zone de pixels (P2) présente une barre qui, selon une vue en plan, est disposée le plus près de la deuxième ligne de données (DL2),
dans lequel la première ligne de données (DL1) chevauche la partie supérieure (221a) de la première sous-électrode la plus extérieure (221) de la première électrode (220) dans la première zone de pixels (P1) et est espacée, selon une vue en plan, de la partie inférieure (221b) de la première sous-électrode la plus extérieure (221) de la première électrode (220) dans la première zone de pixels (P1),
dans lequel la deuxième ligne de données (DL2) est espacée de la partie supérieure (231a) de la deuxième sous-électrode la plus extérieure (231) de la deuxième électrode (230) dans la première zone de pixels (P1) selon une vue en plan, et chevauche la partie inférieure (231b) de la deuxième sous-électrode la plus extérieure (231) de la deuxième électrode (230) dans la première zone de pixels (P1), et
dans lequel la deuxième ligne de données (DL2) est espacée, selon une vue en plan, de la partie inférieure (221b) de la première sous-électrode la plus extérieure (221) de la première électrode (220) dans la deuxième zone de pixels (P2),
**caractérisé en ce que**
la deuxième ligne de données (DL2) chevauche la partie supérieure (221a) de la première sous-électrode la plus extérieure (221) de la première électrode (220) dans la deuxième zone de pixels (P2), et
**en ce que** la partie inférieure (231b) de la deuxième sous-électrode la plus extérieure (231) de la deuxième électrode (230) dans la première zone de pixels (P1) s'étend dans la deuxième zone de pixels (P2), et la partie supérieure (221a) de la première sous-électrode la plus extérieure (221) de la première électrode (220) dans la deuxième zone de pixels (P2) s'étend dans la première zone de pixels (P1).

2. Dispositif selon la revendication 1,
dans lequel la partie supérieure (221a) de la première sous-électrode la plus extérieure (221) a une surface supérieure à celle de la partie inférieure (221b) de la première sous-électrode la plus extérieure (221), et la partie inférieure (231b) de la deuxième sous-électrode la plus extérieure (231) a une surface supérieure à celle de la partie supérieure (231a) de la deuxième sous-électrode la plus extérieure (231).

3. Dispositif selon l'une quelconque des revendications 1 à 2,
dans lequel chacune des première et deuxième électrodes (220, 230) est courbée symétriquement par rapport à une ligne centrale des première et deuxième zones de pixels (P1, P2).

4. Dispositif selon l'une quelconque des revendications 1 à 3,
comprenant en outre une ligne commune (205) dans une zone séparée entre la deuxième sous-électrode la plus extérieure (231) de la deuxième électrode (230) dans la première zone de pixels (P1) et la première sous-électrode la plus extérieure (221) de la première électrode (220) dans la deuxième zone de pixels (P2).

5. Dispositif selon la revendication 4,
dans lequel la ligne commune (205) est une première ligne commune,
le dispositif comprenant en outre une deuxième ligne commune (205), dans lequel les première et deuxième lignes communes (205) sont chacune espacées des deux côtés de la deuxième ligne de données (DL2), sont parallèles à la deuxième ligne de données (DL2) et sont mutuellement connectées entre la partie supérieure (221a) de la première sous-électrode la plus extérieure (221) de la première électrode (220) dans la deuxième zone de pixels (P2) et la partie inférieure (231b) de la deuxième sous-électrode la plus extérieure (231) de la deuxième électrode (230) dans la première zone de pixels (P1).

6. Dispositif selon l'une quelconque des revendications 1 à 5, comprenant en outre :
un premier transistor à couche mince (Tr1) connecté à la ligne de grille (GL) et la première ligne de données (DL1) et configuré pour fournir une première tension de données à la première électrode (220) de la première zone de pixels (P1), et
un deuxième transistor à couche mince (Tr2) connecté à la ligne de grille (GL) et la deuxième ligne de données (DL2) et configuré pour fournir une deuxième tension de données ayant un niveau opposé à un niveau de la première tension de données à ladite deuxième électrode (230) de ladite première zone de pixels (P1).

7. Dispositif selon la revendication 6,
comprenant en outre un filtre couleur (215) sur les première et deuxième lignes de données (DL1, DL2),
dans lequel les première et deuxième électrode (220, 230) sont sur le filtre couleur (215).

8. Dispositif selon la revendication 6 ou 7,
comprenant en outre une couche à cristaux liquides nanocapsule (240) sur les première et deuxième électrodes (220, 230).

9. Dispositif selon la revendication 8,
dans lequel la couche à cristaux liquides nanocapsule (240) est configurée en type de film.

10. Dispositif selon la revendication 8 ou 9,
comprenant en outre une première plaque de polarisation (250) sous le substrat (201) et présentant un premier axe de polarisation, et une deuxième plaque de polarisation (260) sur la couche à cristaux liquides nanocapsule (240) et présentant un deuxième axe de polarisation perpendiculaire au premier axe de polarisation.

11. Dispositif selon l'une quelconque des revendications 7 à 10,
dans lequel une couche d'isolation intermédiaire (209) est disposée sur la deuxième ligne de données (DL2) et le filtre couleur (215) est disposé sur la couche d'isolation intermédiaire (209).

12. Dispositif selon la revendication 11,
dans lequel il n'y a pas de matrice noire entre la couche d'isolation intermédiaire (209) et le filtre couleur (215) .
